# EUROPEAN PATENT SPECIFICATION

(11) **EP 2 815 895 B1**
(45) Date of publication and mention of the grant of the patent: **21.11.2018**
(21) Application number: 13749852.3
(22) Date of filing: 15.02.2013
(51) Int. Cl.: B60C 9/18, B60C 9/22, B60C 9/20

(54) **PNEUMATIC TIRE FOR TWO-WHEELED MOTOR VEHICLE**
LUFTREIFEN FÜR EIN ZWEIRÄDRIGES KRAFTFAHRZEUG
BANDAGE PNEUMATIQUE POUR VÉHICULE MOTORISÉ À DEUX ROUES

(30) Priority: 15.02.2012 JP 2012031013
(43) Date of publication of application: 24.12.2014
(73) Proprietor: Bridgestone Corporation, Tokyo 104-8340 (JP)
(72) Inventor: OSHIMA, Masatomo, Tokyo 104-8340 (JP)
(74) Representative: Oxley, Robin John George
(86) International application number: PCT/JP2013/053739
(87) International publication number: WO 2013/122222

(56) References cited:
- EP-A1- 0 635 383
- FR-A1- 2 924 978
- JP-A- H0 781 311
- JP-A- 2003 252 007
- JP-A- 2005 231 529
- JP-A- 2010 116 058

## Description

### Technical Field

The present invention relates to a pneumatic tire for a two-wheeled motor vehicle.

### Background Art

In order to suppress bulging due to centrifugal force even at high rotation speeds, and to increase tire durability (by what is known as a hoop effect), pneumatic tires for two-wheeled motor vehicles are provided with a spiral belt layer formed by winding a rubber-covered cord in a spiral shape around the tire circumferential direction over a crown portion of a carcass layer that extends in a toroidal shape straddling a pair of left and right bead portions.

Japanese Patent Application Laid-Open (JP-A) No. 2009-51360 proposes a two-wheeled motor vehicle pneumatic tire in which an inclined belt layer, including plural rubber-covered cords inclined at an angle of from 85 degrees to 90 degrees with respect to the tire circumferential direction, is disposed at the tire radial direction outer side of a spiral belt layer in order to further increase the tire durability.

### SUMMARY OF INVENTION

### Technical Problem

However, in the two-wheeled motor vehicle pneumatic tire described in JP-A No. 2009-51360, sometimes the inclined belt layer disposed at the tire radial direction outer side of the spiral belt layer bulges toward the tire radial direction outer side under centrifugal force at high rotation speeds, lowering the tire durability. Attention is also drawn to the disclosures of JP-H07-81311A, FR2,924,978A and EP0,635,383A.

In consideration of the above circumstances, an object of the present invention is to provide a two-wheeled motor vehicle pneumatic tire capable of increasing tire durability. Solution to Problem

A two-wheeled motor vehicle pneumatic tire according to a first aspect of the present invention as claimed in claim 1.

### Advantageous Effects of Invention

According to the present invention, a two-wheeled motor vehicle pneumatic tire can be provided that is capable of increasing tire durability.

### BRIEF DESCRIPTION OF DRAWINGS

Fig. 1 is a tire radial direction cross-section illustrating a two-wheeled motor vehicle pneumatic tire according to a first exemplary embodiment.
Fig. 2 is an opened-out view of the two-wheeled motor vehicle pneumatic tire illustrated in Fig. 1, as viewed from the tire radial direction outer side with a tread portion removed.
Fig. 3 is an opened-out view of a two-wheeled motor vehicle pneumatic tire according to a second exemplary embodiment, as viewed from the tire radial direction outer side with a tread portion removed.

### DESCRIPTION OF EMBODIMENTS

Explanation follows regarding examples exemplary embodiments of the present invention. Note that in the second exemplary embodiment onwards, configuration elements similar to those already described are allocated the same reference numerals, and explanation thereof is omitted. In the following explanation, the widths of the elements such as the belt refer to the width in a peripheral direction.

### First Exemplary Embodiment

A two-wheeled motor vehicle pneumatic tire 10 according to a first exemplary embodiment of the present invention includes a pair of left and right bead portions 12 disposed at a separation to each other, and a carcass layer 14 extending from the respective bead portions 12 in a toroidal shape.

The carcass layer 14 straddles bead cores 16 of the bead portions 12 in a toroidal shape. A carcass ply (body ply) configuring the carcass layer 14 may include a single layer, or may include plural layers. When the carcass layer 14 is configured from 2 sheets of carcass ply 15A, 15B, the directions of cords configuring the carcass plies 15A, 15B may be set in a radial direction (a direction at an angle of 90 degrees with respect to the tire circumferential direction), however a bias structure in which plies with mutually intersecting cord angles in a range of from between 30 degrees and 85 degrees with respect to the tire circumferential direction may also be employed. Note that a tire radial direction R inner side of the carcass layer 14 is covered by rubber, for example.

Both edge portions of the carcass plies 15A, 15B are folded over so as to wrap around the bead cores 16. Nylon cords of twisted nylon fibers are arrayed at a specific interval in each of the carcass plies 15A, 15B.

In the two-wheeled motor vehicle pneumatic tire 10, an inclined belt layer 18 disposed as a belt layer according to the first exemplary embodiment, a spiral belt layer 20 disposed as a belt layer, and a tread portion 22 are provided in that sequence at the tire radial direction R outer side of a crown portion 14C of the carcass layer 14.

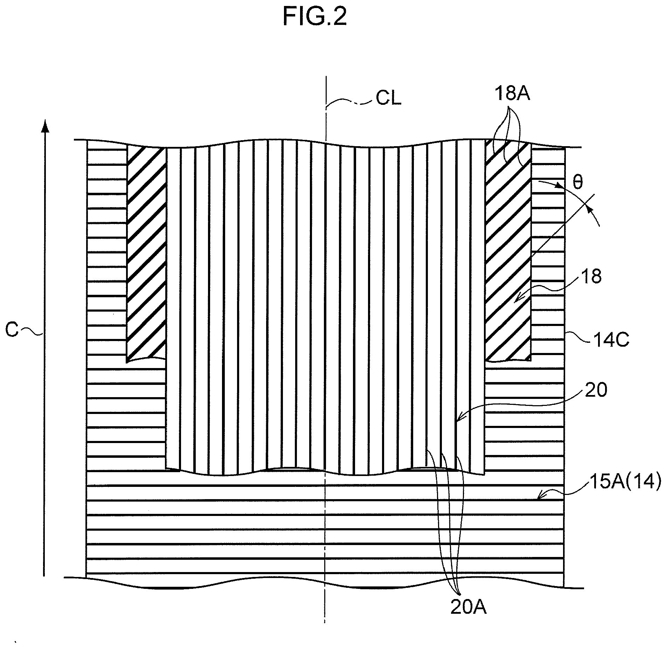

The inclined belt layer 18 according to the first exemplary embodiment is disposed at the tire radial direction R outer side of the crown portion 14C of the carcass layer 14, namely between the carcass layer 14 and the spiral belt layer 20. The inclined belt layer 18 is a cord layer configured by plural cords 18A embedded in covering rubber, set at an incline with respect to the tire circumferential direction C (see Fig. 2). Namely, the inclined belt layer 18 is a belt shaped rubber-covered cord layer including the plural rubber-covered cords 18A at an incline with respect to the tire circumferential direction C. The material of the plural cords 18A is not particularly limited, however an organic fiber such as an aromatic polyamide is preferable.

As illustrated in Fig. 2, an inclination angle θ of the plural cords 18A with respect to the tire circumferential direction C is not particularly limited, however is preferably an angle aligned within a range of from 45 degrees to 90 degrees. Note that when the plural cords 18A curve along their length direction, the "inclination angle θ" is the angle of the plural cords 18A at a position at the width center of the inclined belt layer 18. The inclination angle θ is more preferably an angle aligned within a range of from 70 degrees to 80 degrees.

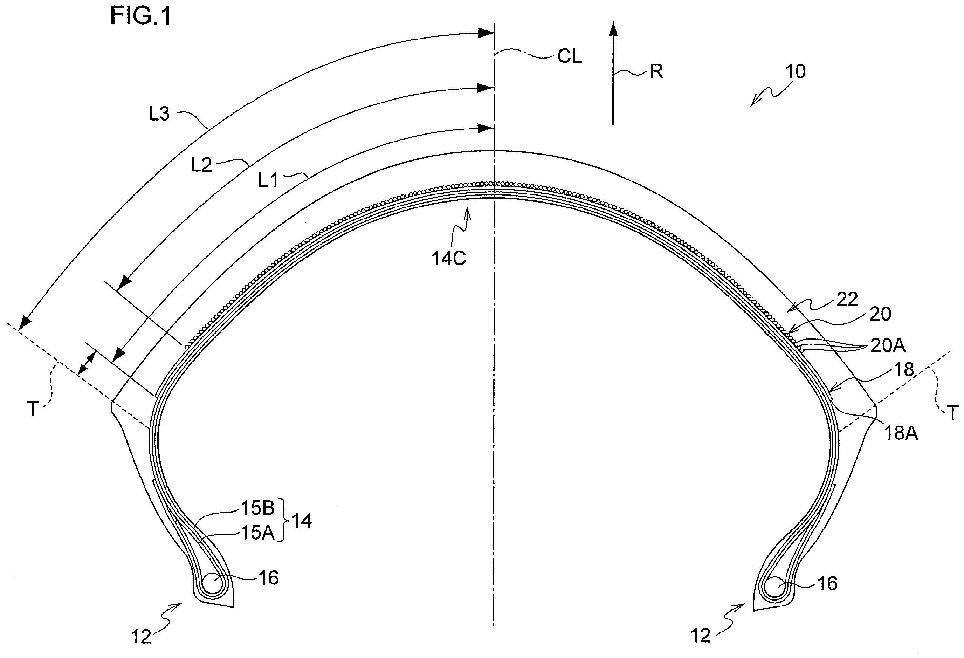

Moreover, as illustrated in Fig. 1, a distance from the location of the tire center CL to the location of a leading edge of the inclined belt layer 18 running along the tread edge T direction, namely a width L1 of the inclined belt layer 18, is set larger than a width L2 of the spiral belt layer. More specifically, when L3 is half the length of the tread periphery between both tread edges T, the width L1 of the inclined belt layer 18 is for example set from 0.9 L3 (90% of L3) to L3, as measured along a surface of the tread portion 22.

Note that the "tread edge T" refers to the maximum width position of the tire tread in an unloaded state when the pneumatic tire 10 is mounted to a standard rim as defined in the JATMA YEAR BOOK (2012, Japan Automobile Tire Manufacturer's Association standard), and inflated to an air pressure (maximum air pressure) of 100% internal pressure corresponding to the maximum load capability (the load in bold type in the correspondence table of internal pressure-load capability) for the applicable size and ply rating in the JATMA YEAR BOOK. Note that when TRA standards or ETRTO standards apply at the location of manufacture or location of use, these respective standards are adhered to.

The spiral belt layer 20 is configured by a belt shaped rubber-covered cord layer formed by embedding a single, or plural adjacent cords 20A in covering rubber. Namely, the spiral belt layer 20 is a belt shaped rubber-covered cord layer including the rubber-covered cord 20A, wound in a spiral shape to give a cord angle within a range of from 0 degrees to 5 degrees with respect to the tire circumferential direction C. The inclined belt layer 18, that is disposed further to the tire radial direction R inner side than the spiral belt layer 20, is thereby pressed down against the crown portion 14C of the carcass layer 14.

The width of the spiral belt layer 20 (L2 × 2) is set at from 70% to 80% of the tread periphery length (L3 × 2) between both tread edges T as measured along a surface of the tread portion 22. Namely, the half width L2 of the spiral belt layer 20 is within a range of from 0.55 L3 to 0.80 L3. Note that the width of the spiral belt layer 20 is also measured as a length in the tread peripheral direction. The half width L2 of the spiral belt layer 20 is set at from 0.55 L3 to 0.80 L3 in consideration of a ground contact portion in the vicinity of a 50 degree camber angle when the bike mounted with the two-wheeled motor vehicle pneumatic tire 10 is at maximum tilt. The material of the cord 20A of the spiral belt layer 20 is not particularly limited, however is for example steel or an aromatic polyamide.

The tread portion 22 is, for example, configured from a thermoplastic elastomer, a thermoplastic resin, or a thermoset resin. The tread portion 22 is not provided with grooves, however there is no particular limitation thereto, and grooves may be provided.

### Operation

In the two-wheeled motor vehicle pneumatic tire 10 according to the first exemplary embodiment, the inclined belt layer 18 is disposed further to the tire radial direction R inner side than the spiral belt layer 20, such that the hoop effect of the spiral belt layer 20 can also be imparted to the inclined belt layer 18. Namely, the spiral belt layer 20 presses against the inclined belt layer 18 at the tire radial direction R inner side, such that the inclined belt layer 18 can be suppressed from bulging toward the tire radial direction R outer side due to centrifugal force. The durability of the two-wheeled motor vehicle pneumatic tire 10 can accordingly be increased in comparison to cases in which the inclined belt layer 18 is disposed further to the tire radial direction R outer side than the spiral belt layer 20.

Moreover, the two-wheeled motor vehicle pneumatic tire 10 is strengthened against lateral force, namely does not readily deform under lateral force, due to the plural cords 18A inclined at an angle of between 45 degrees and 90 degrees included in the inclined belt layer 18.

Note that since the inclined belt layer 18 is disposed further to the tire radial direction R inner side than the spiral belt layer 20, the strength against lateral force that acts on the two-wheeled motor vehicle pneumatic tire 10 when the two-wheeled motor vehicle pneumatic tire 10 is turning is less readily influenced by the angle of the cord included in the inclined belt layer 18 than in cases in which the inclined belt layer 18 is disposed further to the tire set over a wide range of from 45 degrees to 90 degrees with respect to the tire circumferential direction C in comparison to cases in which the inclined belt layer 18 is disposed further to the tire radial direction R outer side than the spiral belt layer 20.

In the two-wheeled motor vehicle pneumatic tire 10 according to the first exemplary embodiment, the ground contact surface area of the two-wheeled motor vehicle pneumatic tire 10 including the tread portion 22 can be made larger due to setting the width L2 of the spiral belt layer 20 to 80% or less of the length L3 of the tread periphery between both tread edges T. Moreover, the burst pressure of the two-wheeled motor vehicle pneumatic tire 10 including the tread portion 22 can be raised due to setting the width L2 of the spiral belt layer 20 to 55% or more of the length L3 of the tread periphery between both tread edges T.

In the two-wheeled motor vehicle pneumatic tire 10 according to the first exemplary embodiment, the width L1 of the inclined belt layer 18 is larger than the width L2 of the spiral belt layer 20, thus increasing the strength of shoulder portions of the tread portion 22, and also increasing the durability of the two-wheeled motor vehicle pneumatic tire 10 including the tread portion 22. This structure moreover prevents a rider from experiencing an unsettling feeling due to a step in the two-wheeled motor vehicle pneumatic tire 10 when, as the ground contact portion moves when progressively tilting the two-wheeled motor vehicle pneumatic tire 10 during a turn, overriding the boundary between a portion where the spiral belt layer 20 is present and a portion where the spiral belt layer 20 is not present.

### Second Exemplary Embodiment

A two-wheeled motor vehicle pneumatic tire according to a second exemplary embodiment of the present invention has the same configuration as the two-wheeled motor vehicle pneumatic tire 10 according to the first exemplary embodiment, with the exception of the inclined belt layer 18.

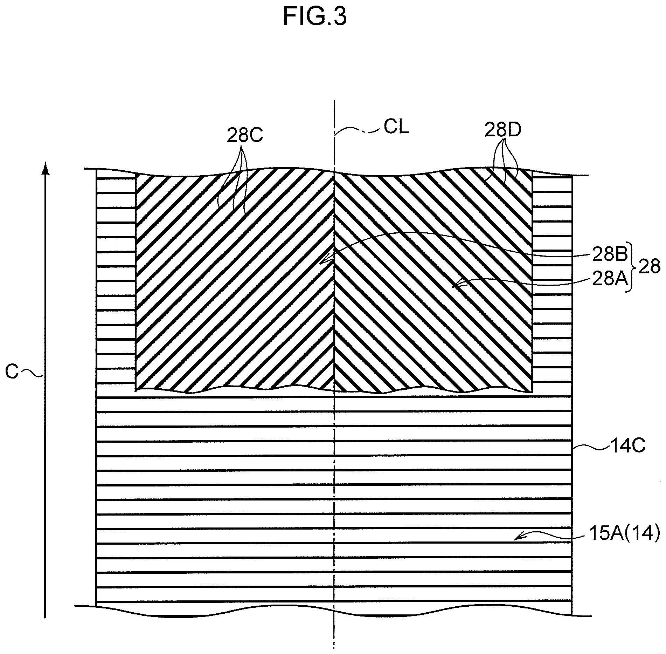

As illustrated in Fig. 3, in the two-wheeled motor vehicle pneumatic tire according to the second exemplary embodiment, an inclined belt layer 28 is disposed at the tire radial direction R outer side of the crown portion 14C of the carcass layer 14, namely between the carcass layer 14 and the spiral belt layer 20. Note that in Fig. 3, the spiral belt layer 20 is omitted from illustration in order for the inclined belt layer 28 to be seen more easily.

In the inclined belt layer 28, plural cords 28C, 28D are disposed with line symmetry about an axis of the tire center CL (tire equatorial plane). Specifically, the inclined belt layer 28 includes a belt 28A, that includes the plural cords 28D and is disposed along a direction from the tire center CL to one of the tread edges T, and a belt 28B, that includes the plural cords 28C and is disposed along a direction from the tire center CL to the other of the tread edges T. The belt 28A and the belt 28B are disposed side-by-side, adjacent at the tire center CL.

The plural cords 28C of the belt 28A and the plural cords 28D of the belt 28B are set at opposite inclination angles to each other with respect to the tire circumferential direction C. Note that the "inclination angle" mentioned above is the angle at a position where the plural cords 28C or cords 28D contact the width center of the inclined belt layer 28 in cases in which the plural cords 28C and cords 28D are curved along their length direction.

In the two-wheeled motor vehicle pneumatic tire according to the second exemplary embodiment, the strength against lateral force that acts on the tire when the two-wheeled motor vehicle pneumatic tire is turning is increased in a well-balanced manner with respect to the tire width direction.

### Modified Examples

Explanation has been given above regarding plural exemplary embodiments of technology disclosed in the present application, however the technology disclosed in the present application is not limited thereto.

For example, in the first exemplary embodiment, explanation is given regarding an example in which the tread portion 22 is not provided with grooves, however grooves may be provided.

In the first exemplary embodiment, a case is described in which both edge portions of the carcass plies 15A, 15B are folded over so as to wrap around the bead cores 16, however both edge portions of the carcass plies 15A, 15B may be anchored by the bead cores 16, so as to sandwich a bead wire from both sides.

Explanation has been given regarding a case in which the width L1 of the inclined belt layer 18 is larger than the width L2 of the spiral belt layer 20, however the width L1 of the inclined belt layer 18 may be the same as the width L2 of the spiral belt layer 20, or may be narrower than the width L2 of the spiral belt layer 20. In cases in which the width L1 of the inclined belt layer 18 is the same as the width L2, or narrower than the width L2 of the spiral belt layer 20, the hoop effect of the spiral belt layer 20 can be imparted to the entire inclined belt layer 18.

Moreover, the belt 28A and belt 28B described in the second exemplary embodiment may be integrally formed together, or may be configured by discontinuous separate bodies. In cases in which they are configured as discontinuous separate bodies, the belt 28A and belt 28B may be disposed separated from each other.

It goes without saying that various modifications may be implemented within a range not departing from the technology disclosed in the present claims.

### Examples

Explanation follows regarding Examples, however the present invention is not limited by these Examples in any way.

In order to confirm the advantageous effects of the above exemplary embodiments, the inventors performed various performance tests, and evaluated performance, for 13 examples of two-wheeled motor vehicle pneumatic tires (referred to below as Examples 1 to 13), as well as for 2 examples of two-wheeled motor vehicle pneumatic tires for comparison (referred to below as Comparative Examples 1, 2).

In each case, the tire size is 180/55ZR17. In each of the tires, 2 sheets of carcass ply are disposed in the carcass layer. In each of the tires, the tread portion is not provided with grooves.

### Example 1

Example 1 is an example of the two-wheeled motor vehicle pneumatic tire 10 according to the first exemplary embodiment described above, and is a two-wheeled motor vehicle pneumatic tire with the structure illustrated in Fig. 1. The width L2 of the spiral belt layer 20 is set at 80% of the length L3 of the tread periphery. Note that in the present Example, the spiral belt layer 20 is not wound onto the tread shoulder portions. The thickness of the tread portion 22 is 7 mm.

The cord material of the carcass plies 15A, 15B is nylon. In the present Example, nylon fibers are twisted into a 0.6 mm φ (diameter) cord. The nylon cord is embedded into the tread shoulder portions at 60 strands/50 mm.

The cord angle of the nylon cord is 90 degrees with respect to the tire equatorial direction at the tread shoulder portion. In two-wheeled motor vehicle tires, the tread portion normally has a rounded shape, and so the cord angle and number of cords embedded per unit length differs between a tread center portion and the tread shoulder portions. The cords are embedded more sparsely at the tread center portion that has a larger outer diameter, similarly to when paper is wrapped around a model of the globe. In tire manufacture, the cord angle with respect to the tire equatorial direction tends to become smaller at the tread center portion than at the tread shoulder portions. In the present Example, the stipulated cord angle is for the tread shoulder portions, and the cord angle of the carcass plies 15A, 15B is measured at a position a distance of 0.1L toward the tire center side from the tread edge T.

In the inclined belt layer 18, the cord angle with respect to the tire circumferential direction C is 45°, and the cord material is an aromatic polyamide (trade name: Kevlar (registered trademark)). Kevlar fibers are twisted into a 0.7 mm φ cord, and the cord is embedded at 40 strands/50 mm.

The cord of the spiral belt layer 20 is configured by twisting steel filaments into a 0.8 mm φ cord, and is wound in a spiral shape embedded at intervals of 40 strands/50 mm. When this is performed, a belt shaped body of 2 side-by-side cords embedded in covering rubber is wound substantially to follow the tire equatorial direction (substantially in the tire circumferential direction) in a spiral shape along the tire rotation axial direction.

The two-wheeled motor vehicle pneumatic tire according to Example 1 was obtained in the above manner.

### Comparative Example 1

In addition to Example 1, a two-wheeled motor vehicle pneumatic tire was also prepared according to Comparative Example 1. The two-wheeled motor vehicle pneumatic tire according to Comparative Example 1 has the configuration of Example 1, but with the inclined belt layer 18 provided further to the tire radial direction R outer side than the spiral belt layer 20. Configuration is otherwise the same as in Example 1.

### Evaluation

Testing was performed under the following conditions to ascertain high speed durability and burst pressure of the two-wheeled motor vehicle pneumatic tires of Example 1 and Comparative Example 1.

Note that high speed durability evaluation is based on the speed at tire breakdown under the conditions defined by JIS K6366, and is expressed as an index with Comparative Example 1 set at 100. The higher the value, the better the result. Similarly, burst pressure evaluation is expressed as an index with Comparative Example 1 set at 100. The higher the value, the better the result.

The test results are shown in Table 1 below.

**Table 1**

| | Width (as proportion of tread periphery (%)) | Inclination angle (°) | High speed durability (Index) | Burst pressure (Index) |
|---|---|---|---|---|
| Example 1 | 80 | 45 | 105 | 102 |
| Comparative Example 1 | 80 | 45 | 100 | 100 |

It can be seen from the evaluation results illustrated in Table 1 that the high speed durability of the two-wheeled motor vehicle pneumatic tire can be increased in Example 1, in which the inclined belt layer 18 is disposed further to the tire radial direction R inner side than the spiral belt layer 20, in comparison to in Comparative Example 1, in which the inclined belt layer 18 is disposed further to the tire radial direction R outer side than the spiral belt layer 20. This is thought to be since the hoop effect of the spiral belt layer 20 can also be imparted to the inclined belt layer 18.

### Examples 2 to 6

Next, two-wheeled motor vehicle pneumatic tires were prepared according to Examples 2 to 6. The two-wheeled motor vehicle pneumatic tires according to Examples 2 to 6 each have the configuration of Example 1, but with the cord angle of the inclined belt layer 18 respectively changed to 50 degrees, 60 degrees, 70 degrees, 80 degrees and 90 degrees with respect to the tire circumferential direction C.

### Comparative Example 2

A two-wheeled motor vehicle pneumatic tire according to Comparative Example 2 was also prepared. The two-wheeled motor vehicle pneumatic tire according to Comparative Example 2 has the configuration of Example 1, with the cord angle of the inclined belt layer 18 changed to 40 degrees with respect to the tire circumferential direction C.

### Evaluation

Testing was then performed to ascertain strength against lateral force for the two-wheeled motor vehicle pneumatic tires of Examples 1 to 6 and Comparative Example 2. Note that in this testing, each of the two-wheeled motor vehicle pneumatic tires was mounted to an actual vehicle and run on a test course. The strength against lateral force was subjected to feeling evaluation by a professional test driver, and the quality was scored on a scale of A (excellent), B (good), and C (normal).

The evaluation results are illustrated in Table 2.

**Table 2**

| | Inclination angle (°) | Width (as proportion of tread periphery (%)) | Strength against lateral force |
|---|---|---|---|
| Comparative Example 2 | 40 | 80 | C |
| Example 1 | 45 | 80 | B |
| Example 2 | 50 | 80 | B |
| Example 3 | 60 | 80 | B |
| Example 4 | 70 | 80 | A |
| Example 5 | 80 | 80 | A |
| Example 6 | 90 | 80 | B |

It can be seen from the evaluation results illustrated in Table 2 that Examples 1 to 6, in which the cord inclination angles of the inclined belt layer 18 are from 45 degrees to 90 degrees, exhibit better strength against lateral force, namely are stronger, than Comparative Example 2. In particular, out of Examples 1 to 6, it can be seen that Examples 4 and 5 exhibit excellent strength against lateral force.

### Examples 7 to 13

Next, two-wheeled motor vehicle pneumatic tires were prepared according to Examples 7 to 13. The two-wheeled motor vehicle pneumatic tires according to Examples 7 to 13 have the configuration of Example 1, with the width L2 of the spiral belt layer 20 respectively changed to 40%, 50%, 55%, 60%, 70%, 90%, and 100% of the tread periphery length L3. Of these, only Examples 1 and 11 fall within the scope of the present invention.

### Evaluation

The contact surface area and burst pressure of the two-wheeled motor vehicle pneumatic tires according to Example 1 and Examples 7 to 13 were ascertained under the following test conditions, using a similar method as for Example 1. Note that "tire contact surface area" is a contact surface area in the vicinity of a 50 degree camber angle.

The evaluation results are illustrated in Table 3. Note that in evaluation of the contact surface area and burst pressure, quality was scored on a scale of A (good), and B (normal).

**Table 3**

| | Width (as proportion of tread periphery (%)) | Inclination angle (°) | Contact surface area | Burst pressure |
|---|---|---|---|---|
| Example 7 | 40 | 45 | A | B |
| Example 8 | 50 | 45 | A | B |
| Example 9 | 55 | 45 | A | A |
| Example 10 | 60 | 45 | A | A |
| Example 11 | 70 | 45 | A | A |
| Example 1 | 80 | 45 | A | A |
| Example 12 | 90 | 45 | B | A |
| Example 13 | 100 | 45 | B | A |

It can be seen from the evaluation results illustrated in Table 3 that the contact surface area of the two-wheeled motor vehicle pneumatic tire can be made larger by setting the width L2 of the spiral belt layer 20 to 80% of the tread periphery length L3 or below. Moreover, it can be seen that the burst pressure of the two-wheeled motor vehicle pneumatic tire can be raised by setting the width L2 of the spiral belt layer 20 to 55% of the tread periphery length L3 or above.

## Claims

1. A two-wheeled motor vehicle pneumatic tire (10), comprising:
a carcass layer (14) straddling a pair of bead portions (12);
an inclined belt layer (18,28) that is disposed at a tire radial direction outer side of a crown portion (14C) of the carcass layer, and that includes a plurality of cords (18A,28C,28D) that are inclined with respect to the tire circumferential direction; and
a spiral belt layer (20) that is disposed at the tire radial direction outer side of the inclined belt layer, and that is formed by winding a rubber-covered cord (20A) in a spiral shape in the tire circumferential direction, charaterised by further comprising a tread portion (22) disposed at the tire radial direction outer side of the spiral belt layer, wherein a width (L2) of the spiral belt layer is set at from 70% to 80% of a tread periphery length (L3) between both tread edges (T) as measured along a surface of the tread portion.

2. The two-wheeled motor vehicle pneumatic tire of claim 1, wherein the plurality of cords are inclined at an angle of from 45 degrees to 90 degrees with respect to the tire circumferential direction (C).

3. The two-wheeled motor vehicle pneumatic tire of claim 2, wherein the plurality of cords are inclined at an angle (θ) of from 70 degrees to 80 degrees with respect to the tire circumferential direction.

4. The two-wheeled motor vehicle pneumatic tire any one of claim 1 to claim 3, wherein a width of the inclined belt layer (L1) is larger than the width of the spiral belt layer (L2).

5. The two-wheeled motor vehicle pneumatic tire of any one of claim 1 to claim 4, wherein in the inclined belt layer, the plurality of cords are disposed with line symmetry about a tire equatorial plane (CL).

## Patentansprüche

1. Luftreifen (10) für ein zweirädriges Kraftfahrzeug, der Folgendes umfasst:
eine Karkassenlage (14), die ein Paar von Wulstabschnitten (12) überspannt,
eine geneigte Gürtellage (18, 28), die an einer in Reifenradialrichtung äußeren Seite eines Scheitelabschnitts (14C) der Karkassenlage angeordnet ist und die eine Vielzahl von Kords (18A, 28C, 28D) einschließt, die in Bezug auf die Reifenumfangsrichtung geneigt sind, und
eine spiralige Gürtellage (20), die an der in Reifenradialrichtung äußeren Seite der geneigten Gürtellage angeordnet ist und die durch Wickeln eines gummiüberzogenen Kords (20A) in einer spiraligen Form in der Reifenumfangsrichtung geformt ist, **dadurch gekennzeichnet, dass** er ferner einen Laufflächenabschnitt (22) umfasst, der an der in Reifenradialrichtung äußeren Seite der spiraligen Gürtellage angeordnet ist, wobei eine Breite (L2) der spiraligen Gürtellage bei von 70 % bis 80 % einer Laufflächen-Umfangslänge (L3) zwischen den beiden Laufflächenkanten (T), gemessen entlang einer Oberfläche des Laufflächenabschnitts, festgesetzt ist.

2. Luftreifen für ein zweirädriges Kraftfahrzeug nach Anspruch 1, wobei die Vielzahl von Kords in einem Winkel von 45 Grad bis 90 Grad in Bezug auf die Reifenumfangsrichtung (C) geneigt ist.

3. Luftreifen für ein zweirädriges Kraftfahrzeug nach Anspruch 2, wobei die Vielzahl von Kords in einem Winkel (θ) von 70 Grad bis 80 Grad in Bezug auf die Reifenumfangsrichtung geneigt ist.

4. Luftreifen für ein zweirädriges Kraftfahrzeug nach einem der Ansprüche 1 bis 3, wobei eine Breite der geneigten Gürtellage (L1) größer ist als eine Breite (L2) der spiraligen Gürtellage.

5. Luftreifen für ein zweirädriges Kraftfahrzeug nach einem der Ansprüche 1 bis 4, wobei in der geneigten Gürtellage die Vielzahl von Kords mit Liniensymmetrie um eine Reifenäquatorialebene (CL) angeordnet ist.

## Revendications

1. Bandage pneumatique pour véhicule motorisé à deux roues (10), comprenant :
une nappe de carcasse (14) chevauchant une paire de parties de talon (12) ;
une couche de ceinture inclinée (18, 28) disposée au niveau d'un côté externe, dans une direction radiale du bandage pneumatique, d'une partie de sommet (14C) de la nappe de carcasse, et incluant plusieurs câblés (18A, 28C, 28D) inclinés par rapport à la direction circonférentielle du bandage pneumatique ; et
une couche de ceinture en spirale (20) disposée au niveau du côté externe, dans la direction radiale du bandage pneumatique, de la couche de ceinture inclinée, et formée en enroulant un câblé recouvert de caoutchouc (20A) en une forme en spirale dans la direction circonférentielle du bandage pneumatique, **caractérisé en ce qu'**il comprend en outre une partie de bande de roulement (22) disposée au niveau du côté externe, dans la direction radiale du bandage pneumatique, de la couche de ceinture en spirale, dans lequel une largeur (L2) de la couche de ceinture en spirale représente 70% à 80% d'une longueur périphérique de la bande de roulement (L3) entre les deux bords de la bande de roulement (T), mesurée le long d'une surface de la partie de bande de roulement.

2. Bandage pneumatique pour véhicule motorisé à deux roues selon la revendication 1, dans lequel les plusieurs câblés sont inclinés à un angle compris entre 45 degrés et 90 degrés par rapport à la direction circonférentielle du bandage pneumatique (C).

3. Bandage pneumatique pour véhicule motorisé à deux roues selon la revendication 2, dans lequel les plusieurs câblés sont inclinés à un angle (θ) compris entre 70 degrés et 80 degrés par rapport à la direction circonférentielle du bandage pneumatique.

4. Bandage pneumatique pour véhicule motorisé à deux roues selon l'une quelconque des revendications 1 à 3, dans lequel une largeur de la couche de ceinture inclinée (L1) est supérieure à la largeur de la couche de ceinture en spirale (L2).

5. Bandage pneumatique pour véhicule motorisé à deux roues selon l'une quelconque des revendications 1 à 4, dans lequel, dans la couche de ceinture inclinée, les plusieurs câblés sont disposés en symétrie de ligne autour d'un plan équatorial du bandage pneumatique (CL).
